# EUROPEAN PATENT APPLICATION

(11) **EP 4 431 344 A1**
(43) Date of publication of application: **18.09.2024**
(21) Application number: 23305347.9
(22) Date of filing: 14.03.2023
(51) Int. Cl.: B60R 19/40, B60R 21/36

(54) **LAND VEHICLE WITH AN AIRBAG DEVICE**

(71) Applicant: ALSTOM Holdings, 93400 Saint-Ouen-sur-Seine (FR)
(72) Inventor: FEL, Landri, A1210 WIEN (AT); CAUZAT, Chiril, 21000 DIJON (FR); PATHIAUX, Arthur, 21121 FONTAINE-LES-DIJON (FR)
(74) Representative: Lavoix

(57) **Abstract**

The invention relates to a land vehicle (10) comprising: a front end (16) with a compartment (18) ; and an airbag (20) able to be received in the compartment.

The airbag comprises: an inflatable frame (26); an envelope (28) integral with the inflatable frame; and an inflating device (30).

The inflatable frame comprises at least three tubular-shaped structural members (32, 34); wherein, in an expanded configuration, each structural member extends substantially rectilinearly between a first end (36), linked to the body, and a second, free end (38).

In the expanded configuration, the envelope forms a closed chamber (49) with a substantially polygonal front panel (48) extending substantially vertically, each summit of said front panel being formed by the second, free end (38) of one of the structural members.

## Description

The present invention relates to a land vehicle designed for moving along a horizontal, main direction, the land vehicle comprising: a body with a front end, the front end comprising a compartment opening toward the main direction; and a protection device comprising an airbag able to deploy from a retracted configuration to an expanded configuration; the airbag in the retracted configuration being received in the compartment of the body, the airbag in the expanded configuration being situated in front of the front end, so as to prevent a shock between said front end and an obstacle during a movement of the vehicle along the main direction.

It is known to provide land vehicles circulating in cities, such as trams or streetcars, with protection devices intended for pedestrians in case of an impact with the vehicle. Document EP2995508, in the name of the Applicant, discloses a land vehicle with a front inflatable airbag.

The protection devices need to provide a sufficient cushioning effect to dampen the effects of a shock for a pedestrian. With the current protection devices, it implies injecting large quantities of gas in the airbag, which means a bulky equipment to incorporate to the vehicle. The time needed for sufficient deploying also depends on the volume of injected gas. However, the protection device needs quick activation so as to effectively prevent shocks.

The present invention aims to solve the above-mentioned problems.

For this purpose, the invention relates to a land vehicle of the aforementioned type, wherein: the airbag comprises: an inflatable frame; an envelope integral with the inflatable frame; and an inflating device able to inflate the inflatable frame; the inflatable frame and the envelope being made in a flexible material; the inflatable frame comprises at least three tubular-shaped structural members; wherein, in the expanded configuration, each structural member extends substantially rectilinearly between a first end, linked to the body, and a second, free end; in the expanded configuration, the envelope forms a closed chamber with a substantially polygonal front panel extending substantially vertically, each summit of said front panel being formed by the second, free end of one of the structural members.

According to preferred embodiments, the land vehicle may include one or more of the following features, considered alone or in any technically possible combination:
- the inflatable frame comprises a first and a second lateral portions, each of the first and second lateral portions comprising an upper and a lower structural members; wherein, in the expanded configuration, the first and second lateral portions are on each side of a vertical median plane of the front end of the body; the front panel is substantially quadrilateral; and in the expanded configuration, each of the upper and lower structural members is inclined relative to a horizontal plane;
- in the expanded configuration, each of the upper and lower structural members forms an angle comprised between 20° and 70° with the horizontal plane;
- the inflatable frame comprises at least one supplementary tubular member, extending between two adjacent structural members;
- the airbag comprises at least one non-return air valve disposed on the envelope, so that, when an air pressure inside the envelope is inferior to an air pressure outside the envelope, the closed chamber fills with ambient air through the non-return valve, and, when the air pressure inside the envelope is superior to the air pressure outside the envelope, said ambient air is prevented from leaving the envelope;
- the at least one non-return air valve comprises at least one air valve unit, said air valve unit comprising a first and a second layers of air-tight, flexible material fixed to each other, the first layer comprising a slot, the second layer being separated from the slot when the air pressure inside the envelope is inferior to the air pressure outside the envelope, said second layer being pressed against the slot when the air pressure inside the envelope is superior to the air pressure outside the envelope;
- the at least one non-return air valve comprises a plurality of air valve unit disposed along a path, said path extending on the envelope ;
- the airbag comprises a grid made of a flexible material and covering the at least one non-return air valve;
- the airbag also comprises at least two belts made of a flexible but non-stretchable material, each belt extending between a first and a second end, the second end being attached to the second end of one of the structural members; the belts being configured so that, in the expanded configuration, each of the belts is put under tension by the inflated frame;
- the airbag also comprises a connecting device able to reversibly attach the inflatable frame to the compartment of the body;
- the airbag also comprises a support made of a rigid material, the first end of each of the structural member being attached to said support;
- the inflating device comprises at least one bottle of compressed gas, connected to the inflatable frame;
- the protection device also comprises an electronic control module able to activate the inflating device for inflating the inflatable frame;
- the land vehicle also comprises an actuation device connected to the electronic control module and operable by an operator for activating the inflating device;
- the land vehicle also comprises sensors connected to the electronic control module and able to detect the presence of a pedestrian in front of the vehicle; and the electronic control module is able to activate the inflating device upon detection of said pedestrian by said sensors.

The invention will be easier to understand in view of the following description, provided solely as an example, and with reference to the appended drawings, wherein:
- Figure 1 is an schematic side view of a land vehicle according to an embodiment of the invention, comprising a protection device;
- Figure 2 is a top view of the protection device of Figure 1; and
- Figure 3 is a front view of the protection device of Figures 1 and 2.

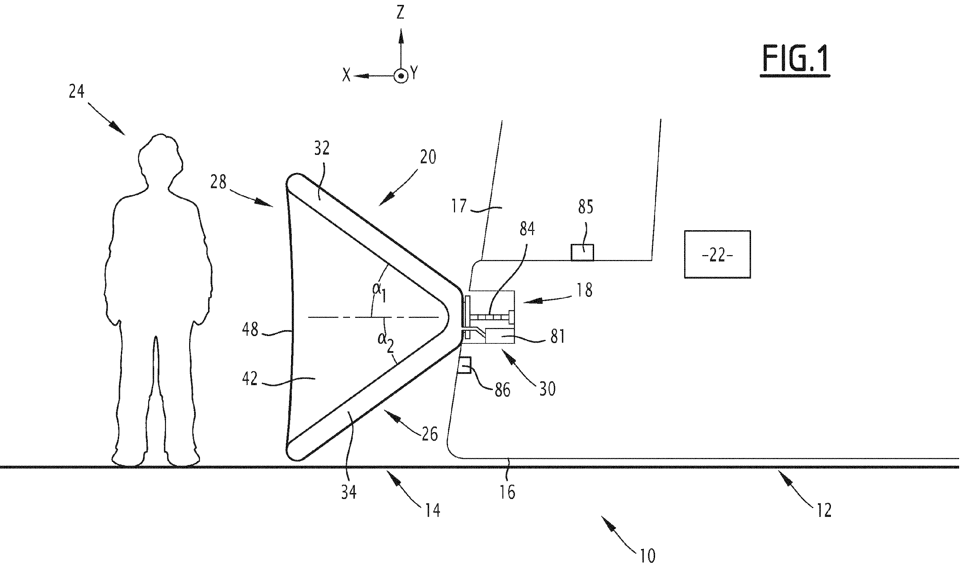

Figure 1 shows a land vehicle 10 according to an embodiment of the invention. Preferably, the land vehicle 10 is a rail vehicle, more preferably a tram or a streetcar. Alternatively, the land vehicle 10 is a train. According to another embodiment, the land vehicle 10 is a road vehicle.

The land vehicle 10 is designed for moving along a main direction, substantially horizontal. In the following description, an orthonormal basis (X, Y, Z), associated with the land vehicle 10, is considered. X represents the main direction, considered horizontal, and Z represents the vertical direction.

The land vehicle 10 comprises a body 12 and a protection device 14.

The body 12 comprises a front end 16 considered according to the main direction X. Preferably, the front end 16 comprises a driving cabin 17, designed for receiving a driver of the land vehicle 10.

The front end 16 also comprises a compartment 18 opening toward the main direction X. Preferably, the compartment 18 is situated lower than the driving cabin 17.

Preferably, the front end 16 also comprises a removable panel (not shown) designed for closing the compartment 18.

The protection device 14 comprises an airbag 20 and an electronic control module 22.

The electronic control module 22 is received in the body 12. The module 22 will be further described below.

The airbag 20 is able to deploy from a retracted configuration to an expanded configuration.

In the retracted configuration (not shown), the airbag is received in the compartment 18 of the front end 16 of the body 12.

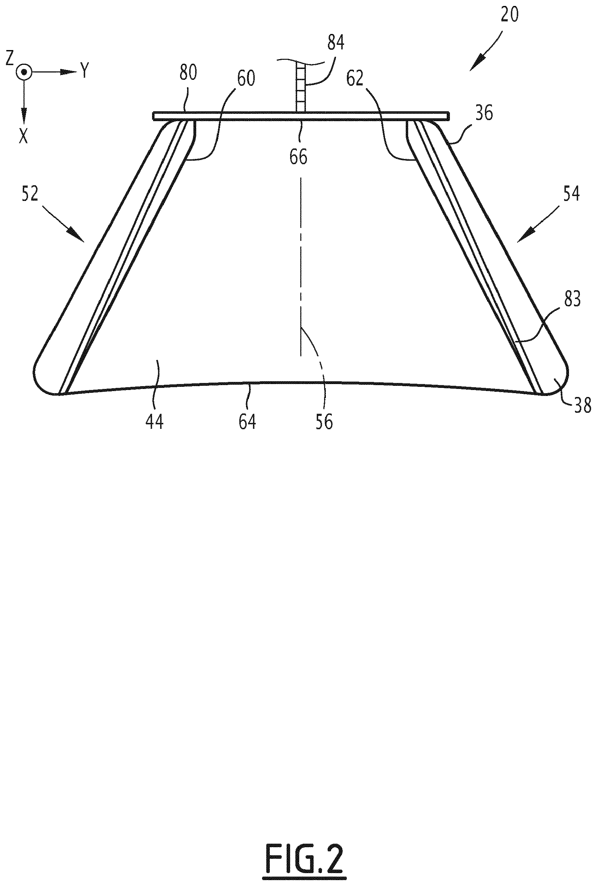

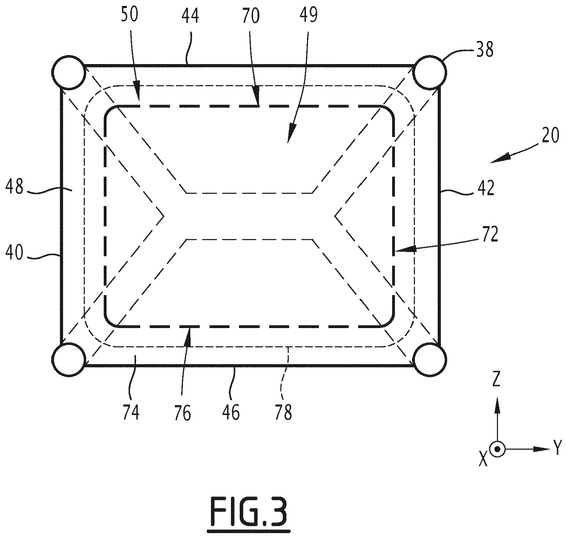

The airbag 20 in the expanded configuration is shown on Figures 1 to 3. The body 12 is not shown on Figures 2 and 3.

As shown on Figure 1, the airbag 20 in the expanded configuration is situated in front of the front end 16 according to the main direction X, so as to prevent a direct shock between said front end 16 and an obstacle 24, during a displacement of the vehicle 10 along the main direction X. In particular, as detailed below, the airbag 20 is designed for protecting a pedestrian 24 from harm caused by such a shock.

The airbag 20 comprises: an inflatable frame 26; an envelope 28; and an inflating device 30.

The inflatable frame 26 and the envelope 28 are made in a flexible material, such as fabric. General features of the inflatable frame 26 and of the envelope 28 will now be disclosed.

The inflatable frame 26 comprises at least three structural members 32, 34. Said structural members 32, 34 are tubular. In the expanded configuration, each structural member 32, 34 extends substantially rectilinearly, between a first 36 and a second 38 ends.

More precisely, in the expanded configuration, the structural members 32, 34 extend around the main direction X. The first ends 36 of the structural members 32, 34 are oriented toward the body 12 and connected to said body, as detailed below; and the second ends 38 are free ends, oriented forward.

The envelope 28 is integral with the inflatable frame 26. More precisely, the envelope 28 is integral with each of the structural members 32, 34 of the inflatable frame 26.

The envelope 28 comprises side panels 40, 42, 44, 46 and a front panel 48. Each side panel 40, 42, 44, 46 is integral with two adjacent structural members 32, 34, as detailed below. The front panel 48 is preferably polygonal, the summits of said polygon being formed by the second ends 38 of the structural members 32, 34.

In the expanded configuration, the front panel 48 substantially extends in a plane (Y, Z) perpendicular to the main direction X; and the side panels 40, 42, 44, 46 substantially extend in planes parallel to X or inclined relative to X.

Preferably, a shape of the front panel 48 is chosen among a triangle a quadrangle, a pentagon, and a hexagon; and the inflatable frame 26 comprises the corresponding number of structural members 32, 34.

In the expanded configuration, the envelope 28 forms a closed chamber 49 delimited by the side panels 40, 42, 44, 46 and by the front panel 48.

In an embodiment, the inflatable frame 26 comprises supplementary tubular members (not shown), extending between two adjacent structural members 32, 34, so as to obtain a more rigid structure for the airbag 20 in the expanded configuration. In a particular embodiment, a supplementary tubular member extends between the second ends 38 of two adjacent structural members 32, 34 and forms a side of the front panel 48. In another embodiment, a supplementary tubular member forms a A-shaped structure with the adjacent structural members 32, 34.

Preferably, the airbag 20 comprises at least one non-return air valve 50. More preferably, one or several of the side panels 40, 42, 44, 46 and front panel 48 includes a non-return air valve 50. An example of a non-return air valve 50 will be detailed below.

The inflatable frame 26 and the envelope 28 of the embodiment of Figures 1-3 will now be specifically described.

In particular, the embodiment of Figures 1-3 illustrates a preferred embodiment, wherein the front panel 48 is rectangular or square and wherein the inflatable frame 26 comprise four structural members 32, 34.

In the embodiment of Figures 1-3, the inflatable frame 26 comprises a first 52 and a second 54 lateral portions. In the expanded configuration, the first 52 and second 54 lateral portions are on each side of a vertical median plane 56 (Figure 2) of the front end 16 of the body.

Each of the first and second lateral portions comprises an upper 32 and a lower 34 tubular-shaped structural members. In the expanded configuration, each of the upper 32 and lower 34 structural members is inclined of an angle α₁, α₂ relative to a horizontal plane. Preferably, each of the upper 32 and lower 34 structural members forms an angle α₁, α₂ comprised between 20° and 70° with the horizontal plane.

In the embodiment of Figures 1-3, the angles α₁ and α₂, formed respectively by the upper 32 and by the lower 34 structural member with the horizontal plane, are close to each other. However, preferably, the angles α₁ and α₂ are different from each other.

In the embodiment of Figures 1-3, the side panels 40, 42, 44, 46 of the envelope 28 comprise a first 40 and a second 42 lateral panels; an upper panel 44; and a lower panel 46. The envelope 28 also comprises the front panel 48 disclosed above.

Each of the first 40 and second 42 lateral panels is substantially triangular. Two sides of the first lateral panel 40 are integral, respectively, with the upper 32 and with the lower 34 structural members of the first lateral portion 52 of the inflatable frame 26. Two sides of the second lateral panel 42 are integral, respectively, with the upper 32 and with the lower 34 structural members of the second lateral portion 54 of the inflatable frame 26.

In the embodiment of Figures 1-3, in the expanded configuration, the first 40 and second 42 lateral panels are substantially symmetrical to each other relative to the vertical median plane 56. In the same manner, the first 52 and second 54 lateral portions of the inflatable frame are substantially symmetrical to each other relative to the vertical median plane 56.

Each of the upper 44 and lower 46 panels is substantially triangular or quadrilateral. In the embodiment of Figures 1-3, each of the upper 44 and lower 46 panels is substantially quadrilateral and comprises: a first 60 and a second 62 lateral sides; a front side 64; and a rear side 66.

The first 60 and second 62 lateral sides of the upper panel 44 are integral with the upper structural members 32, respectively of the first 52 and of the second 54 lateral portions of the inflatable frame. The first 60 and second 62 lateral sides of the lower panel 46 are integral with the lower structural members 34, respectively of the first 52 and of the second 54 lateral portions of the inflatable frame.

In a particular embodiment, the inflatable frame 26 comprises a supplementary tubular member (not shown) extending along the front side of the lower panel 46, between the second ends of the lower structural members 34.

In the embodiment of Figures 1-3, each of the upper 44 and lower 46 panels has a trapezoid shape, the front 64 and rear 66 sides being substantially parallel to each other and the front side 64 being longer than the rear side 66. In another embodiment (not shown), each of the upper 44 and lower 46 panels has a substantially triangular shape, the rear side 66 being of negligible length compared with the front side 64 and with the first 60 and second 62 lateral sides.

In another, less preferred embodiment (not shown), each of the upper 44 and lower 46 panels has a substantially rectangular or square shape, the front 64 and rear 66 sides having similar lengths.

An upper and a lower sides of the front panel 48 are formed by the front sides 64 of the upper 44 and lower 46 panels. Lateral sides of the front panel 48 are formed by the third sides of the first 40 and second 42 lateral panels.

Preferably, in the expanded configuration, a dimension of the front panel 48 along Y is close to a dimension of the front end 16 of the body 12 along Y; and a dimension of the front panel 48 along Z is close to an average height of a pedestrian 24. As detailed below, such dimensions allow protection of the pedestrians 24.

In the embodiment of Figures 1-3, the airbag 20 comprises one non-return air valve 50.

More precisely, in the embodiment of Figures 1-3, the non-return air valve 50 is formed of a plurality of air valve units 70 disposed on a path 72. Preferably, the path 72 is disposed on one of the side panels 40, 42, 44, 46 or front panel 48. In the embodiment of Figures 1-3, the path 72 is disposed on the front panel 48.

For example, the envelope 28 comprises an outer layer 74, made of an air-tight, flexible material; and each air valve unit 70 comprises: a slot 76, preferably elongated, formed in the outer layer 74; and an inner membrane (not shown) fixed to an inside face of the outer layer 74, covering the slot 76. The inner membrane is made of an air-tight flexible material.

If a pressure in the chamber 49 is inferior to an external pressure, the inner membrane leaves the slot 76 open and external air is able to fill the chamber 49.

If a pressure in the chamber 49 is superior to an external pressure, the inner membrane is pressed against the slot 76 and air is trapped inside the chamber.

Preferably, the path 72 forming the non-return air valve 50 is of large dimension, so as to allow the external air to fill the chamber 49 very quickly, as disclosed below.

In the embodiment of Figures 1-3, the path 72 has a closed shape. Preferably, said closed shape encloses a surface representing at least 50% of a surface of the corresponding panel 48 of the envelope 28.

Alternatively, the path 72 has the shape of several strips, substantially parallel to each other, extending on the corresponding panel 48 of the envelope.

Preferably, the envelope 28 also comprises a protective grid 78 made of fabric and covering the non-return air valve 50.

In an embodiment, several or every panel(s) of the envelope 28 comprise(s) a non-return air valve 50 as described above, and preferably a protective grid 78.

In an embodiment, the rear sides 66 of the upper and lower panels 44,46 are integral with each other, so as to close the chamber 49.

In the embodiment of Figures 1-3, the airbag 20 also comprises a support 80 made of a rigid material. The rear sides 66 of the upper and lower panels 44,46 are fixed to the support 80, so as to close the chamber 49. In the same manner, the first ends 36 of the upper and lower structural members 32, 34, are fixed to the support 80.

Preferably, the support 80 has the shape of a flat panel, the inflatable frame 26 and envelope 28 being fixed to a same side of said panel.

The inflating device 30 is designed for inflating the inflatable frame 26. The inflating device 30 comprises at least one bottle 81 of compressed gas, connected to the inflatable frame. An opening of the at least one bottle 81 is commanded by the electronic control module 22.

In an embodiment, the at least one bottle 81 is received in the compartment 18 of the body 12. In another embodiment, the at least one bottle 81 is received in a different location of the land vehicle 10, such as under a floor of the driving cabin 17.

Preferably, the inflating device 30 comprises at least a first bottle of compressed gas, connected to the first lateral portion 52, and at least a second bottle 81, connected to the second lateral portion 54.

In an embodiment, as shown on Figure 1, the upper and lower structural members 32, 34 of the first 52 and/or second 54 lateral portion fluidly communicate with each other.

In another embodiment, the upper and lower structural members 32, 34 are fluidly isolated from each other and each structural member is independently connected to a bottle 81 of compressed gas.

In a preferred embodiment, the airbag 20 also comprises belts 83, made of a flexible but non-stretchable material, such as a reinforced fabric. Each of said belts 83 extends between a first and a second ends.

The second end of each belt 83 is attached to the second end 38 of one of the structural members 32, 34. The belts 83 are configured so that, in the expanded configuration, each of the belts 83 is put under tension by the inflated frame 26.

In a more preferred embodiment, the first end of a belt 83 is attached to the first end 36 of the structural member attached to the second end of said belt. In particular, in the embodiment of Figures 1-3, the airbag 20 comprises a first and a second upper belts 83. As shown on Figure 2, the first and second ends of the upper belts are attached respectively to the first end 36 and to the second end 38 of one of the upper structural members 32. Preferably, the upper belts 83 are disposed outside the closed chamber 49.

Optionally, the airbag 20 also comprises a first and a second lower belts 83, similar to the upper belts 83. The lower belts are attached to the lower structural members 34, similarly to the upper belts 83 attached to the upper structural members 32.

In another more preferred embodiment (not shown), the first end of an upper or lower belt 83 is attached to the support 80 or to the compartment 18, at a non-zero distance from the first end 36 of the structural member 32, 34 attached to the second end of said belt. Thus, in the expanded configuration, the belt 83 forms a stabilizing triangle with the corresponding structural member 32, 34 and with the support 80 or compartment 18.

In another embodiment (not shown), the first end of an upper or lower belt 83 is attached to the envelope 28.

In a preferred embodiment, the airbag 20 also comprises a connecting device 84, able to reversibly attach the inflatable frame 26 to the compartment 18 of the body 12.

Preferably, the connecting device 84 extends between a first end, attached to the compartment 18, and a second end. In the embodiment of Figures 1-3, the second end is attached to the support 80. Alternatively, the second end of the connecting device 84 is attached to the inflatable frame 26 or to the envelope 28.

The connecting device 84 is designed for being as quick and easy as possible to operate by a single operator.

For example, the connecting device 84 comprises: a chain attached to the compartment 18, a free end of the chain comprising a carabiner ; and a ring attached to the support 80 and able to be coupled to the carabiner. Alternatively, the connecting device 84 comprises elements chosen among fabric belts, fabric assemblies fixed with Velcro^{®} tapes, or quick-disconnect mechanical elements such as bolt/screw assemblies.

In an embodiment, the land vehicle 10 also comprises an actuation device 85 disposed in the driving cabin 17, so as to allow the driver to activate the protection device 14. For example, the actuation device 85 is a button or a lever, connected to the electronic control module 22.

In another embodiment, the land vehicle 10 comprises sensors 86 connected to the electronic control module 22 and able to detect the presence of a pedestrian 24 in front of the vehicle; and the electronic control module 22 comprises a program for automatic actuation of the airbag 20, triggered by the detection of a pedestrian.

In an embodiment, the sensors 86 are chosen among radar sensors, lidar sensors, cameras and ultrasonic sensors.

An operating method of the protection device 14 of the land vehicle 10 will now be described.

During a displacement of the land vehicle 10 along the main direction X, if a pedestrian 24 is seen by the driver in front of the vehicle, the protection device 14 is actuated by means of the actuation device 85. Alternatively, the presence of the pedestrian 24 is detected by the sensors 86 and the information is communicated to the electronic control module 22.

Under a command from the electronic control module 22, the inflating device 30 inflates the upper 32 and lower 34 structural members of the inflatable frame 26. Under the deployment of said inflatable frame out of the compartment 18, the envelope 28 expands and air at ambient pressure enters the chamber 49 through the at least one non-return valve 50.

Due to the large dimension of the at least one non-return valve 50, the chamber 49 is very rapidly filled with ambient air, for an efficient protection of the pedestrian.

In an embodiment, the removable panel closing the compartment 18 is opened or removed by the expansion of the envelope 28. Alternatively, the opening or removal of the panel is triggered by the electronic control module 22.

The protection device 14 attains the expanded configuration of Figures 1-3, the front panel 48 extending as a front of the vehicle 10. The stretched upper and lower belts 83 add tension to the structure formed by the inflated frame 26.

The volume of the inflatable frame 26 in the expanded configuration is very small compared to a total volume of the chamber 49. Therefore, the airbag 20 is expanded in a short time, by means of a limited quantity of compressed gas.

In case of an impact with the pedestrian 24, a width of the front end 16 of the vehicle is nearly completely covered by the airbag 20. As the pedestrian is hit by the front panel 48, the chamber 49 is compressed and the inside pressure increases, closing the non-return valve 50 by pressing against each other the outer layer 74 and the inner membrane of each air valve unit 70. The grid 78 protecting the non-return valve ensures that no object is inserted between the two layers, which would prevent the closing of the valve.

Therefore, a shock inflicted to the pedestrian 24 is dampened by the cushioning effect of the closed chamber 49 filled with ambient air. The pedestrian 24 is likely to fall toward the airbag 20, which deforms itself under the impact, retaining the pedestrian. If the pedestrian falls to the ground, the energy of the impact is thus lessened. The presence of the airbag 20 may also protect the pedestrian from a direct impact with the front end 16 after the impact with the protection device.

After the protection device 14 has been used, a maintenance operator detaches the airbag 20 from the compartment 18 by means of the connecting device 84 and closes the compartment 18. The necessary operations are quick and easy to be done by a single operator, before the land vehicle is able to pursue its route.

The frame 26 and envelope 28 of the used airbag are then deflated and refolded, and the inflating device 30 is refilled or replaced, for further use of the airbag 20. Said airbag 20, or a similar, spare airbag, is later installed in the compartment 18, during maintenance operations on the land vehicle 10.

## Claims

1. A land vehicle (10) designed for moving along a horizontal, main direction (X), the land vehicle comprising:
- a body (12) with a front end (16), the front end comprising a compartment (18) opening toward the main direction; and
- a protection device (14) comprising an airbag (20) able to deploy from a retracted configuration to an expanded configuration;
the airbag in the retracted configuration being received in the compartment of the body, the airbag in the expanded configuration being situated in front of the front end, so as to prevent a shock between said front end and an obstacle (24) during a movement of the vehicle along the main direction,
the land vehicle being **characterized in that**:
- the airbag comprises: an inflatable frame (26); an envelope (28) integral with the inflatable frame; and an inflating device (30) able to inflate the inflatable frame; the inflatable frame and the envelope being made in a flexible material;
- the inflatable frame comprises at least three tubular-shaped structural members (32, 34); wherein, in the expanded configuration, each structural member extends substantially rectilinearly between a first end (36), linked to the body (12), and a second, free end (38);
- in the expanded configuration, the envelope forms a closed chamber (49) with a substantially polygonal front panel (48) extending substantially vertically, each summit of said front panel being formed by the second, free end (38) of one of the structural members.

2. A land vehicle according to claim 1, wherein:
- the inflatable frame comprises a first (52) and a second (54) lateral portions, each of the first and second lateral portions comprising an upper (32) and a lower (34) structural members; wherein, in the expanded configuration, the first and second lateral portions are on each side of a vertical median plane (56) of the front end of the body;
- the front panel (48) is substantially quadrilateral; and
- in the expanded configuration, each of the upper and lower structural members is inclined relative to a horizontal plane.

3. A land vehicle according to claim 2, wherein, in the expanded configuration, each of the upper (32) and lower (34) structural members forms an angle (α₁, α₂) comprised between 20° and 70° with the horizontal plane.

4. A land vehicle according to one of the previous claims, wherein the inflatable frame comprises at least one supplementary tubular member, extending between two adjacent structural members (32, 34).

5. A land vehicle according to one of the previous claims, wherein the airbag comprises at least one non-return air valve (50) disposed on the envelope (28), so that, when an air pressure inside the envelope is inferior to an air pressure outside the envelope, the closed chamber (49) fills with ambient air through the non-return valve, and, when the air pressure inside the envelope is superior to the air pressure outside the envelope, said ambient air is prevented from leaving the envelope.

6. A land vehicle according to claim 5, wherein the at least one non-return air valve (50) comprises at least one air valve unit (70), said air valve unit comprising a first and a second layers of air-tight, flexible material fixed to each other, the first layer comprising a slot (76), the second layer being separated from the slot when the air pressure inside the envelope is inferior to the air pressure outside the envelope, said second layer being pressed against the slot when the air pressure inside the envelope is superior to the air pressure outside the envelope.

7. A land vehicle according to claim 6, wherein the at least one non-return air valve (50) comprises a plurality of air valve unit (70) disposed along a path (72), said path extending on the envelope.

8. A land vehicle according to one of claims 5 to 7, wherein the airbag comprises a grid (78) made of a flexible material and covering the at least one non-return air valve (50).

9. A land vehicle according to one of the previous claims, wherein the airbag also comprises at least two belts (83) made of a flexible but non-stretchable material, each belt extending between a first and a second end, the second end being attached to the second end of one of the structural members (32, 34); the belts being configured so that, in the expanded configuration, each of the belts is put under tension by the inflated frame.

10. A land vehicle according to one of the previous claims, wherein the airbag also comprises a connecting device (84) able to reversibly attach the inflatable frame to the compartment (18) of the body.

11. A land vehicle according to one of the previous claims, wherein the airbag also comprises: a support (80) made of a rigid material, the first end (36) of each of the structural member being attached to said support.

12. A land vehicle according to one of the previous claims, wherein the inflating device (30) comprises at least one bottle (81) of compressed gas, connected to the inflatable frame (26).

13. A land vehicle according to one of the previous claims, wherein the protection device (14) also comprises an electronic control module (22) able to activate the inflating device (30) for inflating the inflatable frame (26).

14. A land vehicle according to claim 13, also comprising an actuation device (85) connected to the electronic control module (22) and operable by an operator for activating the inflating device (30).

15. A land vehicle according to claim 13, also comprising sensors (86) connected to the electronic control module (22) and able to detect the presence of an obstacle (24) in front of the vehicle, the obstacle (24) being a pedestrian ; the electronic control module (22) being able to activate the inflating device (30) upon detection of said pedestrian by said sensors.
